# EUROPEAN PATENT SPECIFICATION

(11) **EP 1 912 787 B1**
(45) Date of publication and mention of the grant of the patent: **06.09.2017**
(21) Application number: 06764951.7
(22) Date of filing: 13.07.2006
(51) Int. Cl.: B32B 17/06, B32B 17/10, C03C 27/12, C09K 21/02, C01B 33/32, E06B 5/16, C08K 3/00

(54) **FIRE RESISTANT GLAZINGS**
BRANDSCHUTZVERGLASUNGEN
GLAÇAGES RÉSISTANT AU FEU

(30) Priority: 19.07.2005 GB 0514749
(43) Date of publication of application: 23.04.2008
(73) Proprietor: Pilkington Group Limited, Nr. Ormskirk Lancashire L40 5UF (GB)
(72) Inventor: HOLLAND, John Richard, Ormskirk, Lancashire L40 1S (GB); HOLDEN, David William, Wigan Greater Manchester WN5 8HP (GB); BOND, Stephen Ian, Warrington, Cheshire WA5 4LB (GB); VARMA, Karikath Sukumar, Southport, Merseyside PR8 2BE (GB)
(74) Representative: Teasdale, Nicola Joanne
(86) International application number: PCT/GB2006/002602
(87) International publication number: WO 2007/010204

(56) References cited:
- EP-A- 1 431 027
- GB-A- 717 496
- GB-A- 968 337
- US-A- 5 766 770
- US-A- 5 900 281
- US-B1- 6 387 346

## Description

This invention relates to fire protection glazing systems which exhibit improved long term UV stability, to methods for the production of such glazings, to novel interlayers useful in such glazings and to novel solutions useful in the production of such interlayers.

Fire resistant laminated glazings comprising at least one interlayer of an intumescent material and at least two panes of glass are well known. One common type of such glazings comprises an intumescent interlayer which is obtained by drying an aqueous solution of an alkali metal silicate solution. Pilkington plc sells this type of glazing under its trademarks PYROSTOP and PYRODUR. When these laminates are exposed to a fire the interlayer intumesces and expands to form a foam. The foam provides a thermally insulating layer which acts as a barrier to infra-red radiation and also helps to maintain the integrity of the glazing thus restricting the spread of the fire. These glazings can meet the requirements of most applicable building regulations and are widely used in architecture and building.

The interlayers which are incorporated into these laminated glazings are manufactured with care so as to ensure that the interlayer is uniform and optically clear. Without the use of a UV filtering/absorbing polymer interlayer for external applications, one problem which may be encountered is a tendency for their aesthetic properties to deteriorate slightly over an extended period of time. Specifically the glazings may assume a slightly hazy appearance and in the extreme case discrete microbubbles of gas may be visible in the interlayer. This problem is known to be associated with exposure to direct ultra-violet radiation over an extended period usually a few years.

GB 2150463 discloses fire resistant laminated glazings wherein one of the panes has a coating which screens ultra violet radiation on its external surface. USP 4626301 discloses a method for producing an intumescent interlayer by drying an alkali metal silicate waterglass solution in an atmosphere comprising at least 30% by volume of free oxygen. Fire resistant glazings incorporating an interlayer produced using this method are stated to exhibit improved stability under ultra violet radiation. USP 5766770 discloses that the introduction of a potassium silicate waterglass into an interlayer results in a laminated glazing having a reduced sensitivity to ultra violet radiation.

GB 717 496 discloses a grain stabilized metal compact consisting of a metal of the groups platinum, iridium, osmium, palladium, rhodium and ruthenium or an alloy of these metals having silica uniformly distributed through it. None of these proposals has proved to satisfy the requirement for a glazing whose appearance does not significantly deteriorate over the lifetime of the glazing.

We have now discovered that a fire resistant glazing having an increased stability to UV radiation may be produced by incorporating particles of a material which absorbs hydrogen into the interlayer. Applicants have discovered that the introduction of these particulate materials increases the time of exposure of the glazing to UV radiation before bubbles of gas become visible in the interlayer.

Accordingly from a first aspect this invention provides a fire resistant glazing comprising at least one clear intumescent interlayer comprising an alkali metal silicate waterglass and at least two glass panes wherein the interlayer comprises a particulate material characterised in that the particulate material absorbs hydrogen and is dispersed throughout the interlayer.

The particulate material which absorbs hydrogen will preferably take the form of colloidal particles which are dispersed evenly within the interlayer.

The size of particles of the particulate material is preferably in the range of 1 to 150 nm. These particles are often termed and for the purposes of this application will hereinafter be referred to as nanoparticles. The nanoparticles preferably have an average size in the range 10 to 100 nm and most preferably in the range of 15 to 70 nm. Larger particles may be less effective in stabilising the interlayer. The efficacy of any nanoparticulate additive may be determined by routine experiment. The nanoparticles may be dispersed in an aqueous silicate solution prior to it being dried to form a colloidal dispersion. These dispersions are optically clear and may be dried to form an optically clear interlayer. Dispersions of a particulate material which absorbs hydrogen in an aqueous solution comprising an alkali metal silicate waterglass are believed to be novel and provide a further aspect of the invention.

According to a second aspect of the present invention there is provided an aqueous alkali metal silicate waterglass solution comprising: a dispersion of a particulate material wherein the particulate material absorbs hydrogen.

The nanoparticles may be formed from a variety of materials. The preferred materials are those which are known as hydrogen absorbers and may be fabricated in nanoparticulate form. The preferred nanoparticulate materials are metals especially nickel, platinum and palladium. The most preferred material is platinum.

The production of fire resistant laminated glazings having a waterglass based interlayer has been described in a number of patents including British Patents GB 1518598 and GB 2199535, United States Patents USP 4451312, USP 4626301 and USP 5766770. USP 4626301 and USP 5766770 further disclose the incorporation of a polyhydric organic compound into the waterglass solution. The organic compound serves to reduce the incidence of cracking at the surface of the dried interlayer and in a fire serves to improve the fire resistance of the laminate by forming a char which tends to preserve the integrity of the laminate.

The preferred alkali metal silicate waterglasses for use in the production of the interlayers of this invention are sodium or potassium silicate waterglasses. Any of the sodium silicate waterglasses which are known to be useful in the art may be used in this invention. The sodium silicates may be those wherein the weight ratio of SiO₂: Na₂O is at least 1.6:1 and preferably is in the range 2.0:1 to 6.0:1, more usually in the range 2.0: to 4.0:1.. These preferred silicates are those wherein the weight ratio SiO₂ : M₂O is in the range 2.5 to 4.0. Sodium silicate waterglass solutions having a weight ratio of SiO₂:Na₂O in the range 2:1 to 4:1 are available as articles of commerce. Specifically solutions wherein this ratio is 2.0:1, 2.5:1, 2.85:1, 3.0:1 and 3.3:1 are available as articles of commerce. Solutions having a weight ratio of SiO₂:Na₂O intermediates between these values may be produced by blending these commercially available materials.

Potassium silicate and lithium silicate waterglass solutions may also be used to produce the interlayers of this invention. In general they will be used as a partial replacement for the sodium silicate waterglass and the molar ratio of sodium ions to the total of potassium and/or lithium ions is at least 2:1. Where a potassium silicate waterglass is used it is preferably one in which the molar ratio of SiO₂:K₂O is in the range 1.4:1 to 2.5:1.

In a preferred embodiment the alkali metal silicate waterglass solution used to produce an interlayer according to this invention of this invention comprises a mixture of a sodium silicate waterglass and a potassium silicate waterglass. More preferably such solutions comprise a mixture in which the molar ratio of sodium ions to potassium ions is at least 3:1 are most preferably at least 4:1.

The waterglass solutions used in the production of the interlayers of this invention will preferably comprise a relatively high proportion of solid materials. The solutions must be clear stable aqueous solutions which can be dried to form clear interlayers. More dilute solutions may be used but the additional water adds to the amount of water which must be removed during the drying step. The preferred solutions useful according to this invention comprise from 30 to 45% by weight of solid materials. Waterglass solutions comprising from 35 to 40% by weight of solid materials are commercially available and are thereby preferred for use in the present invention.

In a preferred embodiment the interlayers for use in the fire resistant glazings of the present invention are produced by drying an aqueous dispersion according to the second aspect of the present invention.

The solutions used to produce the interlayers of this invention may further comprise one or more of the polyhydric organic compounds which are known in the art to be useful adjuvants. Polyhydric compounds which have been proposed for use include glycerol, a derivative of glycerol or a mono or a polysaccharide, in particular a sugar.

The most commonly used polyhydric compound and the preferred compound for use in the present invention is glycerol.

The waterglass solutions used to produce the fire resistant interlayers of this invention preferably comprise from 6 to 10% by weight by weight of a polyhydric organic compound and from 30 to 70% by weight of water.

The amount of nanoparticulate hydrogen absorbing material which is dispersed in these solutions should be sufficient to provide the concentration in the dried interlayer which minimises the formation of bubbles in the dried interlayer upon exposure to UV light to the desired degree. However, the use of excessive quantities of nanoparticulate material may be expensive and can detract from the appearance of the glazing and is preferably avoided. This addition of nanoparticulate material may be used in conjunction with other means of shielding the interlayer from UV radiation such as the incorporation of a UV absorbing material into the interlayer, the provision of a UV absorbing coating on at least one surface of a pane of the glass or using a glass pane which absorbs UV radiation.

Preferably the aqueous dispersion will comprise from 0.5 to 10ppm of the particulate material. Aqueous dispersions of a particulate material which absorbs hydrogen in an aqueous solution comprising an alkali metal silicate waterglass which comprise from 30 to 70% by weight of water, from 6 to 10% by weight of a polyhydric organic compound and from 0.5 to 10ppm of the particulate material are believed to be novel and comprise a further aspect of this invention.

The concentration of particulate material in the dried interlayer will typically be from 1 to 20ppm. In a patent application filed concurrently herewith we disclose that the stability of interlayers comprising an alkali metal silicate waterglass may be improved by reducing the concentration of certain transition metals in the interlayer. Where the interlayer comprises a lower concentration of such transition metals the amount of particulate additive as described in this application which is required to produce the desired degree of stability is correspondingly reduced.

The dispersions may be dried to form clear intumescent interlayers using conventional techniques. For example the dispersions may be spread upon the surface of the glass sheet which is provided with an edge barrier in order to retain the dispersion of the surface of the glass. The quantity of dispersion which is employed will vary according to the thickness of the interlayer which is desired. This quantity may be determined by routine experiment.

The dispersion is then dried under carefully controlled conditions of temperatures and humidity so as to ensure the production of a clear transparent interlayer which is free from bubbles and other optical imperfections. The water content of the dispersion is reduced during the drying step to a level which is in the range 10 to 35% and by weight of the total weight of the dried interlayer. The concentrations of the silicate, the polyhydric compound and the nanoparticulate additive are correspondingly increased. A fire resistant material useful as an interlayer in a fire resistant laminated glazing which comprises an alkali metal silicate waterglass, from 10 to 35% by weight of water, from 12 to 20% by weight of a polyhydric organic compound and from 1 to 20ppm of a particulate material which absorbs hydrogen are believed to be novel and comprise a further aspect of the invention.

The thickness of the dried interlayer will generally be in the range 0.5 to 2.0 mm. The formulation of thicker interlayers requires longer drying times and is thereby disadvantageous. Thinner interlayers require correspondingly shorter drying times. Laminates having a thicker interlayer may be produced by bringing two sheets of glass having a thinner interlayer say from 0.5 to 1.0 mn thick into face to face contact so as to form an interlayer which would be from 1.0 to 2.0 mm thick.

Fire resistant laminates comprising an intumescent interlayer according to this invention will generally comprise an interlayer which is from 1.0 to 3.0 mm thick. The glass sheets used in these laminates will typically be sheets of soda lime float glass.

The thickness of the glass sheet on which the solutions are dried may vary typically from 2.0 mm to 4.0 mm. An edge barrier formed from a material such as a clay may be provided around the edge of the glass sheet so as to retain the solution on the glass. The glass will most commonly be soda lime float glass. Toughened and annealed float glass may also be used. Glass panes having a functional coating upon one or both surfaces may also be used. The coated surface may be on the inside or the outside of the laminate. Coatings which are known to absorb UV radiation may be especially advantageous. Other coated glass panes which may be used include solar control glasses and self cleaning photoactive glasses.

A fire resistant laminate may be formed by placing a second glass sheet on top of the interlayer and laminating the structure produced. Mounting this second sheet so as to place the interlayers in contact with each other results in a laminate having a thicker interlayer. Mounting this second glass sheet so that its glass surface contacts the interlayer on the first sheet and subsequently placing a third glass sheet on top of the interlayer on the second glass sheet results in a laminate having two interlayers mounted between three panes of glass.

In an alternative process the dispersions may be dried on the surface of a substrate and, provided that the interlayer has sufficient mechanical strength, it can be separated from the substrate and placed between two glass sheets to form a fire resistant laminate. Suitable substrates on which the dispersion could be dried include glass, metals such as stainless steel and polymeric materials such as PTFE and polyolefins such as polypropylene. Where the substrate is clear and transparent e.g. when the substrate is a clear polymeric film, the film with the interlayer dried upon one surface may be mounted between two glass panes so as to form a fire resistant laminate without the need to separate the dried interlayer from the substrate.

Intumescent interlayers may also be produced using granular hydrated metal silicates which are mixed with the quantity of water required to from the interlayer and the particulate material. The interlayer may be formed by heating this mixture until a clear dispersion is formed. An interlayer may be conveniently formed by introducing the mixture between two opposed glass panes and heating the assembly produced. USP 4268581 describes the production of fire resistant laminates by subjecting such an assembly to a lamination process.

Another type of process by which the intumescent interlayers may be formed is a cast in place process. Such processes are described for example in USP 5565273 and USP 5437902 and comprise the introduction of a solution comprising an alkali metal silicate and a curing agent between two opposed glass panes and curing the solution to form an interlayer. The interlayers produced by these cast in place processes typically comprise from 40 to 60% by weight of water.
The invention is illustrated by the following examples

### Example 1

An aqueous platinum sol comprising 2.202% of a platinum compound supplied by the Johnson Matthey Company containing 45.4% Pt, equivalent to 1% colloidal platinum was mixed into sodium silicate, via a mixture with glycerol.

Platinum sol (0.15g) was mixed with glycerol (6.0g) and this solution was poured slowly into a solution of sodium silicate (93.1g Si0₂:Na₂0 3.3:1. Solids content 36%) with continuous stirring. The resulting dispersion contained 15ppm of platinum. The size of the colloidal particles was approximately 50nm, measured by quasi-elastic light scattering.

To prepare the fire resistant glazing, a piece of 3.0mm thick soda-lime-silica float glass, 30cm x 30cm was used as a substrate for the pouring solution. A barrier was made around the perimeter of one surface of the piece of float glass. The pouring solution was poured onto the piece of glass such that a mass of solution of 5kg/m² of glass is used. The glass sheet was placed in an oven and dried over a prolonged period in a controlled atmosphere until the water content of the layer had reduced to about 26% by weight.. A clear layer having a depth of approximately 1.4mm had formed on the surface of the glass. The edge barrier was cut away and a second sheet of 3.0mm thickness soda-lime-silica float glass was placed on top of the dried layer and a laminate was produced.

The resultant glass was subjected to accelerated testing in comparison with a control glass having an identical interlayer which contained no platinum.

The glasses were exposed to direct sunlight in an accelerated ageing facility in the Arizona desert for 6 months continuously. On inspection at 3 months the control glass which did not contain platinum contained a number of small bubbles and by six months contained a large number of bubbles up to 1 mm in diameter. The glass with platinum did not contain any bubbles after 6 months.

A similar result was obtained when the glasses were exposed to intense simulated sunlight on a Xenotest 150S weatherometer. The control glass had failed due to the formation of bubbles at 100 hours while bubbles did not form in the platinum sample until in excess of 400 hours.

A third test was conducted on a testing facility according to ISO 12543pt4. In this test the platinum containing sample did not show any bubbles after 2300 hours, where the standard requires 2000 hours for a pass, and the control sample had failed due to the formation of bubbles after 1500 hours.

### Example 2

A solution containing a platinum sol was made according to the method in example 1. The silicate used in this case was a commercially available sodium silicate with an SiO₂:Na₂O weight ratio of 3.3:1, 36% by weight solids and 2.7ppm by weight iron, and the platinum concentration was 5ppm. This solution was used to produce a laminated glass using the method described in example 1. A control glass was produced using the same silicate solution without the platinum.

When tested against a control glass according to ISO 12543 pt4 the glass which contained the platinum did not contain any bubbles after 2300 hours, whilst the control glass had started to fail due to the formation of bubbles after around 2000 hours and contained a number of small bubbles after 2300 hours.

### Example 3

A platinum sol was prepared from coated silica particles containing 98% by weight silica by dissolving the coated silica (27.7pts) in aqueous sodium hydroxide solution (14.99%, 72.3pts). The size of these particles measured by quasi-elastic light scattering was around 1500nm. 5.817g of his solution was diluted to 931g with the commercially available sodium silicate from Example 1, and 60g of glycerol. This solution was dried into an interlayer and laminated using the method described in Example 1. A control glass was made without the platinum.

When the laminate containing the platinum was exposed to intense simulated sunlight on a Xenotest 150S weatherometer bubbles appeared by 118hours, no different from a control sample without platinum. The larger platinum particles are less effective in stabilising the laminate.

### Example 4

An aqueous palladium sol was prepared from a palladium compound supplied by Johnson Matthey. This was incorporated into a sodium silicate solution as used in Example 1 in a similar manner to that described in example 1. The solution contained 15ppm by weight of palladium. The size of the palladium particles was 50nm.

A fire resistant glass laminate was prepared using the method described in example 1 and a control glass laminate was prepared using the identical silicate.

When exposed to intense simulated sunlight on a Xenotest 150S weatherometer bubbles did not appear until after 300 hours. This compares with less than 118 hours for a control sample without palladium, however the laminate did develop a hazy appearance after 300 hours.

A further sample of this laminate was exposed to intense natural sunlight in a facility in the Arizona desert. Whilst the control sample contained bubbles after 3 months, the palladium sample did not. However the palladium sample developed a hazy appearance. After 6 months the palladium sample had developed bubbles.

## Claims

1. A fire resistant glazing comprising at least one clear intumescent interlayer comprising an alkali metal silicate waterglass and at least two glass panes wherein the interlayer comprises a particulate material **characterised in that** the particulate material absorbs hydrogen and is dispersed throughout the interlayer.

2. A glazing according to claim 1 **characterised in that** the particulate material comprises particles having a particle size which is the range from 1 to 150 nm.

3. A glazing according to either of claims 1 or 2 **characterised in that** the particles have an average particle size which is in the range of from 15 to 70 nm.

4. A glazing according to any of the preceding claims **characterised in that** the particulate material is a metal.

5. A glazing according to claim 4 **characterised in that** the metal is selected from the group comprising nickel, platinum and palladium.

6. A glazing according to any of the preceding claims **characterised in that** the concentration of particulate material in the interlayer is from 1 to 20 ppm.

7. A glazing according to any of the preceding claims **characterised in that** the alkali metal silicate is a sodium silicate wherein the weight ratio SᵢO₂: Na₂O is in the range 2:1 to 6:1.

8. A glazing according to claim 7 **characterised in that** the weight ratio SiO₂:Na₂O is in the range 2:1 to 4:1

9. A glazing according to any of the preceding claims **characterised in that** the interlayer has a water content of from 10 to 60%.

10. A glazing according to claim 9 **characterised in that** the interlayer has a water content of from 10 to 35%.

11. A glazing according to any of the preceding claims **characterised in that** the interlayer comprises a polyhydric organic compound.

12. A glazing according to claim 11 **characterised in that** the polyhydric organic compound is glycerol.

13. A glazing according to any of the preceding claims **characterised in that** the interlayer comprises form 12 to 20% by weight of a polyhydric organic compound

14. An aqueous alkali metal silicate waterglass solution comprising:
a dispersion of a particulate material wherein the particulate material absorbs hydrogen.

15. An aqueous metal silicate waterglass solution according to claim 14 **characterised in that** the solution comprises:
from 30 to 70% by weight of water,
from 6 to 10% by weight of a polyhydric organic compound and
from 0.5 to 10% by weight of particulate material.

## Patentansprüche

1. Brandschutzverglasung, die mindestens eine durchsichtige intumeszente Zwischenschicht, die ein Alkalimetallsilicatwasserglas umfasst, und mindestens zwei Glasplatten umfasst, wobei die Zwischenschicht ein partikelförmiges Material umfasst, **dadurch gekennzeichnet, dass** das partikelförmige Material Wasserstoff absorbiert und überall in der Zwischenschicht dispergiert ist.

2. Verglasung nach Anspruch 1, **dadurch gekennzeichnet, dass** das partikelförmige Material Partikel umfasst, die eine Partikelgröße aufweisen, die im Bereich von 1 bis 150 nm liegt.

3. Verglasung nach Anspruch 1 oder 2, **dadurch gekennzeichnet, dass** die Partikel eine mittlere Partikelgröße aufweisen, die im Bereich von 15 bis 70 nm liegt.

4. Verglasung nach einem der vorhergehenden Ansprüche, **dadurch gekennzeichnet, dass** das partikelförmige Material ein Metall ist.

5. Verglasung nach Anspruch 4, **dadurch gekennzeichnet, dass** das Metall aus der Gruppe ausgewählt ist, die Nickel, Platin und Palladium umfasst.

6. Verglasung nach einem der vorhergehenden Ansprüche, **dadurch gekennzeichnet, dass** die Konzentration des partikelförmigen Materials in der Zwischenschicht im Bereich von 1 bis 20 ppm liegt.

7. Verglasung nach einem der vorhergehenden Ansprüche, **dadurch gekennzeichnet, dass** das Alkalimetallsilicat ein Natriumsilicat ist, wobei das Gewichtsverhältnis SiO₂ : Na₂O im Bereich von 2:1 bis 6:1 liegt.

8. Verglasung nach Anspruch 7, **dadurch gekennzeichnet, dass** das Gewichtsverhältnis SiO₂ : Na₂O im Bereich von 2:1 bis 4:1 liegt.

9. Verglasung nach einem der vorhergehenden Ansprüche, **dadurch gekennzeichnet, dass** die Zwischenschicht eine Wassergehalt von 10 bis 60 % hat.

10. Verglasung nach Anspruch 9, **dadurch gekennzeichnet, dass** die Zwischenschicht einen Wassergehalt von 10 bis 35 % hat.

11. Verglasung nach einem der vorhergehenden Ansprüche, **dadurch gekennzeichnet, dass** die Zwischenschicht eine organische Verbindung mit mehreren Hydroxygruppen aufweist.

12. Verglasung nach Anspruch 11, **dadurch gekennzeichnet, dass** die organische Verbindung mit mehreren Hydroxygruppen Glycerin ist.

13. Verglasung nach einem der vorhergehenden Ansprüche, **dadurch gekennzeichnet, dass** die Zwischenschicht 12 bis 20 Gew.-% einer organischen Verbindung mit mehreren Hydroxygruppen aufweist.

14. Wässrige Alkalimetallsilicatwasserglaslösung, die umfasst:
eine Dispersion eines partikelförmigen Materials, wobei das partikelförmige Material Wasserstoff absorbiert.

15. Wässrige Metallsilicatwasserglaslösung nach Anspruch 14, **dadurch gekennzeichnet, dass** die Lösung umfasst:
30 bis 70 Gew.-% Wasser,
6 bis 10 Gew.% einer organischen Verbindung mit mehreren Hydroxygruppen, und
0,5 bis 10 Gew-% partikelförmiges Material.

## Revendications

1. Vitrage résistant au feu comprenant au moins une couche intercalaire intumescente transparente comprenant un verre soluble de silicate de métal alcalin et au moins deux panneaux de verre dans lequel la couche intercalaire comprend un matériau particulaire **caractérisé en ce que** le matériau particulaire absorbe l'hydrogène et est dispersé dans la couche intercalaire.

2. Vitrage selon la revendication 1, **caractérisé en ce que** le matériau particulaire comprend des particules ayant une taille de particule qui se trouve dans la plage de 1 à 150 nm.

3. Vitrage selon l'une ou l'autre des revendications 1 ou 2, **caractérisé en ce que** les particules ont une taille moyenne de particule qui se trouve dans la plage de 15 à 70 nm.

4. Vitrage selon l'une quelconque des revendications précédentes, **caractérisé en ce que** le matériau particulaire est un métal.

5. Vitrage selon la revendication 4, **caractérisé en ce que** le métal est sélectionné dans le groupe comprenant le nickel, le platine et le palladium.

6. Vitrage selon l'une quelconque des revendications précédentes, **caractérisé en ce que** la concentration en matériau particulaire dans la couche intercalaire est de 1 à 20 ppm.

7. Vitrage selon l'une quelconque des revendications précédentes, **caractérisé en ce que** le silicate de métal alcalin est un silicate de sodium dans lequel le rapport en poids SiO₂/Na₂O est dans la plage de 2/1 à 6/1.

8. Vitrage selon la revendication 7, **caractérisé en ce que** le rapport en poids SiO₂/Na₂O est dans la plage de 2/1 à 4/1.

9. Vitrage selon l'une quelconque des revendications précédentes, **caractérisé en ce que** la couche intercalaire a une teneur en eau de 10 à 60 %.

10. Vitrage selon la revendication 9, **caractérisé en ce que** la couche intercalaire a une teneur en eau de 10 à 35 %.

11. Vitrage selon l'une quelconque des revendications précédentes, **caractérisé en ce que** la couche intercalaire comprend un composé organique polyhydrique.

12. Vitrage selon la revendication 11, **caractérisé en ce que** le composé organique polyhydrique est le glycérol.

13. Vitrage selon l'une quelconque des revendications précédentes, **caractérisé en ce que** la couche intercalaire comprend de 12 à 20 % en poids d'un composé organique polyhydrique.

14. Solution aqueuse de verre soluble de silicate de métal alcalin comprenant :
une dispersion d'un matériau particulaire dans laquelle le matériau particulaire absorbe l'hydrogène.

15. Solution aqueuse de verre soluble de silicate de métal selon la revendication 14, **caractérisée en ce que** la solution comprend
de 30 à 70 % en poids d'eau,
de 6 à 10 % en poids d'un composé organique polyhydrique, et
de 0,5 à 10 % en poids d'un matériau particulaire.
